# EUROPEAN PATENT APPLICATION

(11) **EP 3 046 219 A1**
(43) Date of publication of application: **20.07.2016**
(21) Application number: 14841247.1
(22) Date of filing: 30.06.2014
(51) Int. Cl.: H02J 50/00, H01F 38/14

(54) **WIRELESS POWER RECEIVING DEVICE**

(30) Priority: 30.08.2013 JP 2013179676
(71) Applicant: Panasonic Intellectual Property Management Co., Ltd., Osaka-shi, Osaka 540-6207 (JP)
(72) Inventor: KOIZUMI, Masayoshi, Osaka 540-6207 (JP); OHASHI, Osamu, Osaka 540-6207 (JP); SADAKATA, Hideki, Osaka 540-6207 (JP); FUJITA, Atsushi, Osaka 540-6207 (JP); OMORI, Yoshiharu, Osaka 540-6207 (JP)
(74) Representative: Schwabe - Sandmair - Marx
(86) International application number: PCT/JP2014/003463
(87) International publication number: WO 2015/029297

(57) **Abstract**

A wireless power receiving device for receiving power wirelessly is configured to include a resonant circuit including a power receiving coil and a resonant capacitor for receiving power from a power feeding coil; and a phase adjustment circuit that is provided at a rear stage of the resonant circuit and adjusts a phase difference between a power feeding coil current and a power receiving coil current at a specific frequency to cancel horizontal magnetic flux.

## Description

### Technical Field

The present disclosure relates to a wireless power receiving device for wirelessly receiving power fed from a power feeding device on the ground using electromagnetic force.

### BACKGROUND ART

In recent years, electrically driven motor vehicles (hereinafter simply referred to as a "vehicle"), such as an EV (Electric Vehicle) or a PHEV (Plug-in Hybrid Electric Vehicle), are becoming popular. Such a vehicle, which is equipped with a large-capacity storage battery, stores electrical energy supplied externally in the storage battery and travels using the stored electrical energy.

A method for externally charging a storage battery of a vehicle is known that wirelessly feeds power between a primary coil of a power feeding device on the ground and a secondary coil of a power receiving device on the vehicle using electromagnetic force. Considering power supply from the primary coil on the ground to the secondary coil mounted on the bottom of the vehicle in a wireless power feeding system employing the above method, a horizontal magnetic flux parallel to the ground can be unnecessary radiation. As such, the wireless power feeding system is required to reduce the unnecessary radiation. As a method for reducing unnecessary radiation, for example, the method disclosed in PTL 1 has been known.

PTL 1 discloses a method that lowers an unnecessary radiation value at a specific frequency using frequency spreading to alternate drive frequencies and thereby reduces the radiation.

### Citation List

### Patent Literature

PTL 1: Unexamined Japanese Patent Publication No. 2010-193598

### SUMMARY OF THE INVENTION

### TECHNICAL PROBLEMS

However, the method disclosed in PTL 1 is not sufficient to reduce the unnecessary radiation to meet regulatory limits defined by law and is required to further reduce the unnecessary radiation. A drive frequency band available for wireless power feeding is also limited and furthermore the drive frequency cannot be changed freely in frequency spreading. In addition, changing the drive frequency in a wireless power feeding system affects many characteristics, such as power supply efficiency, heat generation, etc., so that it is difficult to actually change the drive frequency.

An object of the present disclosure is to provide a wireless power receiving device that reduces unnecessary radiation without changing a drive frequency.

### SOLUTIONS TO PROBLEMS

A wireless power receiving device of the present disclosure, which receives power wirelessly, is configured to include a resonant circuit including a power receiving coil and a resonant capacitor for receiving power from a power feeding coil; and a phase adjustment circuit that is provided at a rear stage of the resonant circuit and adjusts a phase difference between a power feeding coil current and a power receiving coil current at a specific frequency so as to cancel horizontal magnetic flux.

### ADVANTAGEOUS EFFECTS OF INVENTION

According to the present disclosure, unnecessary radiation can be reduced without changing a drive frequency.

### BRIEF DESCRIPTION OF THE DRAWINGS

[FIG. 1] Block diagram illustrating a configuration of a charging system according to first and second exemplary embodiments of the present disclosure.
[FIG. 2] Block diagram illustrating an internal configuration of a power feeding unit and a power receiving unit shown in FIG. 1.
[FIG. 3] (a) illustrates an equivalent circuit of the power feeding unit and the power receiving unit shown in FIG. 2; (b) illustrates an equivalent circuit with no phase adjustment circuit.
[FIG. 4] Figures illustrating an arrangement of a power feeding coil and a power receiving coil shown in FIG. 1.
[FIG. 5] A conceptual diagram illustrating a magnetic field shape produced between the power feeding coil and the power receiving coil according to the first exemplary embodiment of the present disclosure when a power feeding coil current and a power receiving coil current are in phase.
[FIG. 6] A figure illustrating a relation between a phase difference between the power feeding coil current and the power receiving coil current and capacitance of a phase adjustment capacitor.
[FIG. 7] Figures illustrating an arrangement of a power feeding coil and a power receiving coil according to the second exemplary embodiment of the present disclosure.
[FIG. 8] A conceptual diagram illustrating a magnetic field shape produced between the power feeding coil and the power receiving coil according to the second exemplary embodiment of the present disclosure when a power feeding coil current and a power receiving coil current are opposite in phase.
[FIG. 9] A block diagram illustrating another internal configuration of the power feeding unit and the power receiving unit.
[FIG. 10] A figure illustrating an equivalent circuit of the power feeding unit and the power receiving unit shown in FIG. 9.
[FIG. 11] Figures illustrating another configuration of a resonant circuit.

### DESCRIPTION OF EMBODIMENTS

Exemplary embodiments of the present disclosure will now be described in detail with reference to the drawings.

### (First exemplary embodiment)

### <Configuration of charging system>

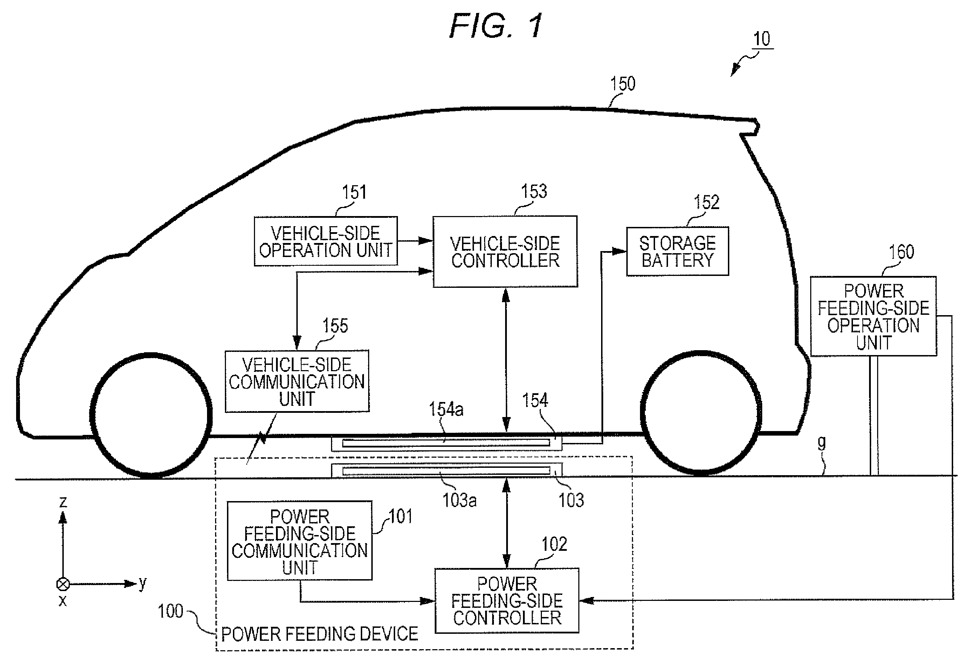

A configuration of charging system 10 according to a first exemplary embodiment of the present disclosure is described with reference to FIG. 1.

Charging system 10 includes power feeding device 100, vehicle 150, and power feeding-side operation unit 160. FIG. 1 shows that power can be fed through power feeding coil 103a and power receiving coil 154a opposite to each other.

Power feeding device 100 is installed on or partially buried in the ground so that power feeding unit 103 is exposed from the earth's surface g. Power feeding device 100 is provided, for example, in a parking space and feeds power to power receiving unit 154 while being opposed to power receiving unit 154 during parking of vehicle 150. Here, power feeding refers to supplying power from power feeding coil 103a to power receiving coil 154a. A configuration of power feeding device 100 will be described below.

Vehicle 150 is a motor vehicle that runs by the power of storage battery 152, for example, such as an EV (Electric Vehicle) or a PEV (Plug-in Electric Vehicle). A configuration of vehicle 150 will be described below.

Power feeding-side operation unit 160 outputs a power feeding start signal indicating a start of power feeding or a power feeding stop signal indicating a stop of power feeding to power feeding device 100 when operated from outside of vehicle 150.

### <Configuration of vehicle>

Vehicle 150 mainly includes vehicle-side operation unit 151, storage battery 152, vehicle-side controller 153, power receiving unit 154, and vehicle-side communication unit 155.

Vehicle-side operation unit 151 accepts operations from a user and outputs various signals in response to the accepted operations to vehicle-side controller 153.

Storage battery 152 stores power supplied from power feeding device 100 through power receiving unit 154.

Vehicle-side controller 153 controls power receiving unit 154 and vehicle-side communication unit 155 to perform processing associated with charging or to perform processing associated with suspension of charging based on the various signals from vehicle-side operation unit 151. Vehicle-side controller 153 also sends information to and receives information from power feeding-side controller 102 of power feeding device 100 through vehicle-side communication unit 155.

Power receiving unit 154 has power receiving coil 154a. Power receiving coil 154a can be, for example, a solenoid coil and receives power fed from power feeding coil 103a of power feeding unit 103. Power receiving unit 154 supplies power received by power receiving coil 154a to storage battery 152 under control of vehicle-side controller 153. Power receiving unit 154 is mounted on a bottom of vehicle 150, being exposed to the outside.

Vehicle-side communication unit 155 generates a charge enabling signal to enable charging or a charge disabling signal to disable charging and transmits the generated charge enabling signal or charge disabling signal to power feeding-side communication unit 101 under control of vehicle-side controller 153. Here, the charge disabling signal is transmitted, for example, when displacement is detected during power feeding or when storage battery 152 is fully charged.

### <Configuration of power feeding device>

Power feeding device 100 mainly includes power feeding-side communication unit 101, power feeding-side controller 102, and power feeding unit 103.

Power feeding-side communication unit 101 receives a charge enabling signal or a charge disabling signal from vehicle-side communication unit 155 and outputs the received charge enabling signal or charge disabling signal to power feeding-side controller 102.

Power feeding-side controller 102 controls power feeding unit 103 to cause power feeding coil 103a to feed power to power receiving coil 154a when a power feeding start signal is input from power feeding-side operation unit 160 and a charge enabling signal is input from power feeding-side communication unit 101.

Power feeding-side controller 102 controls power feeding unit 103 to stop power feeding when a power feeding stop signal is input from power feeding-side operation unit 160 and not to start power feeding or to stop power feeding when a charge disabling signal is input from power feeding-side communication unit 101.

Power feeding-side controller 102 also sends information to and receives information from vehicle-side controller 153 of vehicle 150 through power feeding-side communication unit 101.

Power feeding unit 103 has power feeding coil 103a, which can be a solenoid coil for example. Power feeding unit 103 feeds power to power receiving coil 154a through power feeding coil 103a under control of power feeding-side controller 102. Power feeding unit 103 feeds power, for example, using electromagnetic induction, electric field resonance, or magnetic field resonance.

### <Detailed configuration of power feeding unit and power receiving unit>

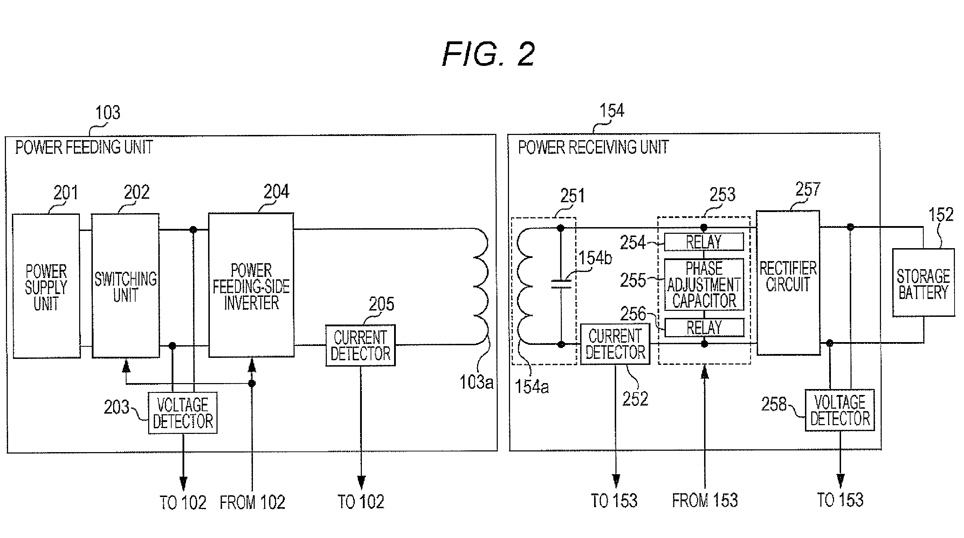

An internal configuration of the above power feeding unit 103 and power receiving unit 154 will be described hereinafter. FIG. 2 is a block diagram illustrating the internal configuration of power feeding unit 103 and power receiving unit 154 shown in FIG. 1.

Power feeding unit 103 includes power supply unit 201, switching unit 202, voltage detector 203, power feeding-side inverter 204, current detector 205, and power feeding coil 103a.

Power supply unit 201 supplies DC power with a predetermined voltage and current to power feeding-side inverter 204 through switching unit 202.

Switching unit 202 selectively connects power feeding-side inverter 204 to power supply unit 201 or disconnects power feeding-side inverter 204 from power supply unit 201 under control of power feeding-side controller 102.

Voltage detector 203 detects a voltage value of the DC power supplied from power supply unit 201 to power feeding-side inverter 204 and outputs the value of the detected voltage to power feeding-side controller 102.

Power feeding-side inverter 204 converts the DC power supplied by power supply unit 201 to AC power and supplies the AC power to power feeding coil 103a under control of power feeding-side controller 102. A current supplied to power feeding coil 103a is referred to as a power feeding coil current.

Current detector 205 detects a current value and a phase of the current of the AC power supplied from power feeding-side inverter 204 to power feeding coil 103a and outputs the value of the detected current and the detected phase of the current to power feeding-side controller 102.

Power feeding coil 103a, which is supplied with the AC power from power feeding-side inverter 204, feeds power to power receiving coil 154a.

While voltage detector 203 is provided between power supply unit 201 and power feeding-side inverter 204, voltage detector 203 may be provided between power feeding-side inverter 204 and power feeding coil 103a. While current detector 205 is provided between power feeding-side inverter 204 and power feeding coil 103a, current detector 205 may be provided between power supply unit 201 and power feeding-side inverter 204.

Power receiving unit 154 includes resonant circuit 251, current detector 252, phase adjustment circuit 253, rectifier circuit 257, and voltage detector 258.

Resonant circuit 251 includes power receiving coil 154a and resonant capacitor 154b. Power receiving coil 154a generates an electromotive force by being subjected to an electromagnetic field (including magnetic flux) generated by power feeding coil 103a of power feeding unit 103 and supplies the generated electromotive force to phase adjustment circuit 253. A current generated by the electromotive force is hereinafter referred to as a power receiving coil current. Resonant capacitor 154b resonates with power receiving coil 154a and contributes to an efficient current flow at a predetermined frequency (resonant frequency).

Current detector 252 detects a current value and a phase of the current of power supplied from power receiving coil 154a and outputs the value of the detected current and the detected phase of the current to vehicle-side controller 153.

Phase adjustment circuit 253 includes phase adjustment capacitor 255 in parallel with power receiving coil 154a, and both ends of phase adjustment capacitor 255 are connected to relays 254, 256, respectively. Since power feeding characteristics vary depending on conditions such as gap, displacement, SOC (State of Charge), etc., phase adjustment is required. To this end, relays 254, 256 are turned on or off. When vehicle-side controller 153 controls relays 254, 256 to turn on, phase adjustment capacitor 255 functions. Then phase adjustment circuit 253 adjusts the phase of a power receiving coil current supplied from power receiving coil 154a so that the power receiving coil current whose phase has been adjusted and the power feeding coil current have a phase difference of 180°.

Here, vehicle-side controller 153 obtains the phase of the power feeding coil current from power feeding-side controller 102 of power feeding device 100 through vehicle-side communication unit 155 and obtains the phase of the power receiving coil current from current detector 252 of power receiving unit 154. Vehicle-side controller 153 controls relays 254, 256 of phase adjustment circuit 253 to turn on when the phase difference between the obtained power receiving coil current and the power feeding coil current is equal to or larger than a predetermined threshold.

Rectifier circuit 257 rectifies the power receiving coil current whose phase has been adjusted by phase adjustment circuit 253 and supplies the rectified current to storage battery 152.

Voltage detector 258 detects a voltage value of DC power supplied from rectifier circuit 257 to storage battery 152 and outputs the value of the detected voltage to vehicle-side controller 153.

### <Configuration of charging system>

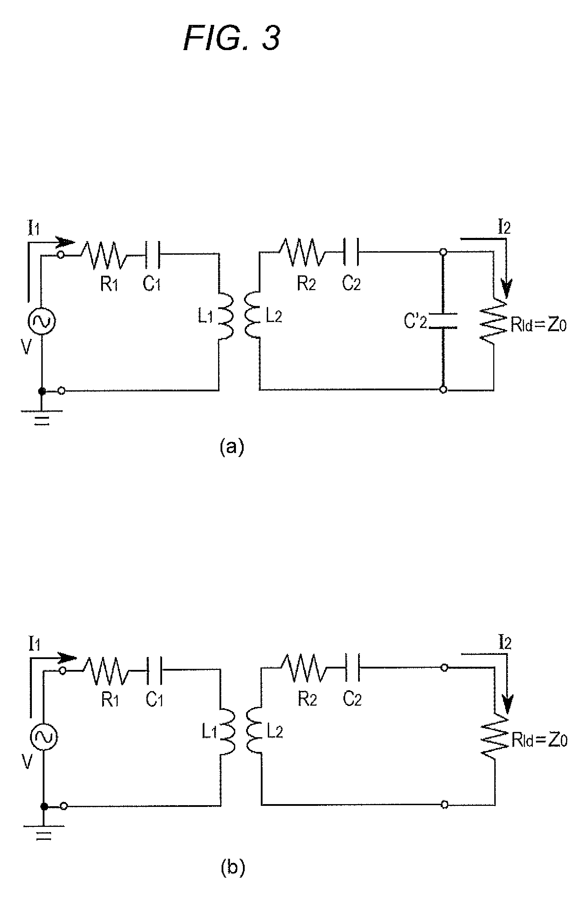

FIG. 3(a) illustrates an equivalent circuit of power feeding unit 103 and power receiving unit 154 shown in FIG. 2. In this figure, R₁ refers to resistance in power feeding unit 103, and C₁ refers to a resonant capacitor of power feeding unit 103, where R₁ and C₁ are not shown in FIG. 2. L₁ refers to a resonant inductor (corresponding to power feeding coil 103a) of power feeding unit 103. L₂ refers to a resonant inductor (corresponding to power receiving coil 154a) of power receiving unit 154, R₂ refers to wiring resistance in power receiving unit 154 and resistance of rectifier circuit 257, C₂ refers to resonant capacitor 154b, C₂ refers to phase adjustment capacitor 255, and R_{ld} = Zo refers to a storage battery (load). An equivalent circuit that does not include a phase adjustment circuit is illustrated in FIG. 3(b) for reference purposes.

### <Arrangement of coils>

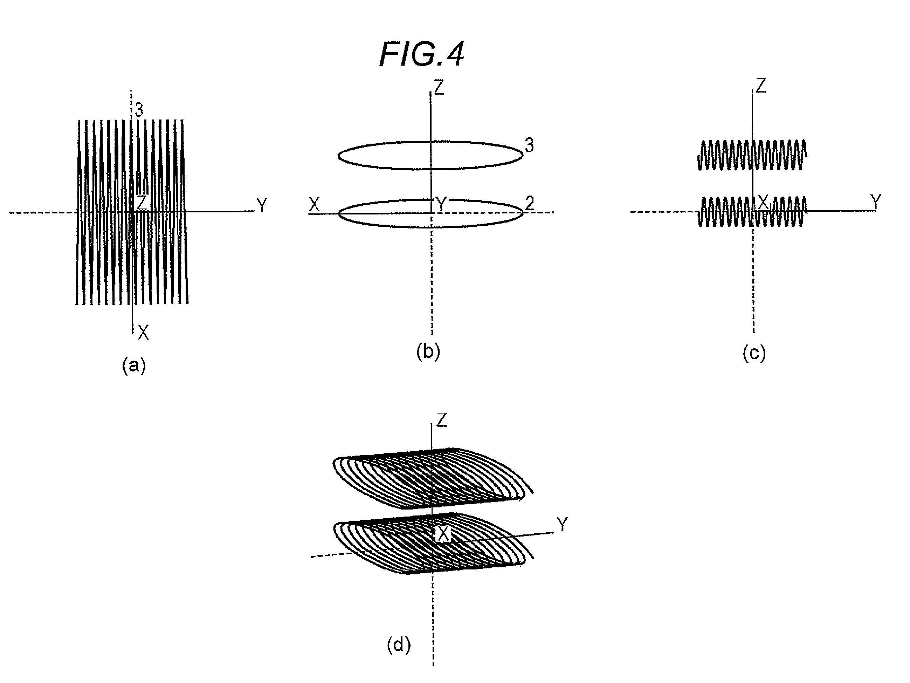

Arrangement of above-mentioned power feeding coil 103a and power receiving coil 154a is described below with reference to FIG. 4. In FIG. 4, power feeding coil 103a and power receiving coil 154a are aligned with each other and cores penetrating through the coils are omitted. The x-axis represents the transverse direction of vehicle 150, where +x indicates the right of vehicle 150 and -x indicates the left of vehicle 150. The y-axis represents the longitudinal direction of vehicle 150, where +y indicates the rear of vehicle 150 and -y indicates the front of vehicle 150. The z-axis represents the vertical direction to the ground, where +z indicates the top of vehicle 150 and -z indicates the bottom of vehicle 150.

FIGS. 4(a), 4(b), and 4(c) represent an x-y plane, x-z plane, and y-z plane, respectively, and FIG. 4(d) represents a perspective view of power feeding coil 103a and power receiving coil 154a.

Thus, solenoid coils for use in power feeding coil 103a and power receiving coil 154a are arranged with their axes parallel to the ground g.

### <Direction of magnetic flux>

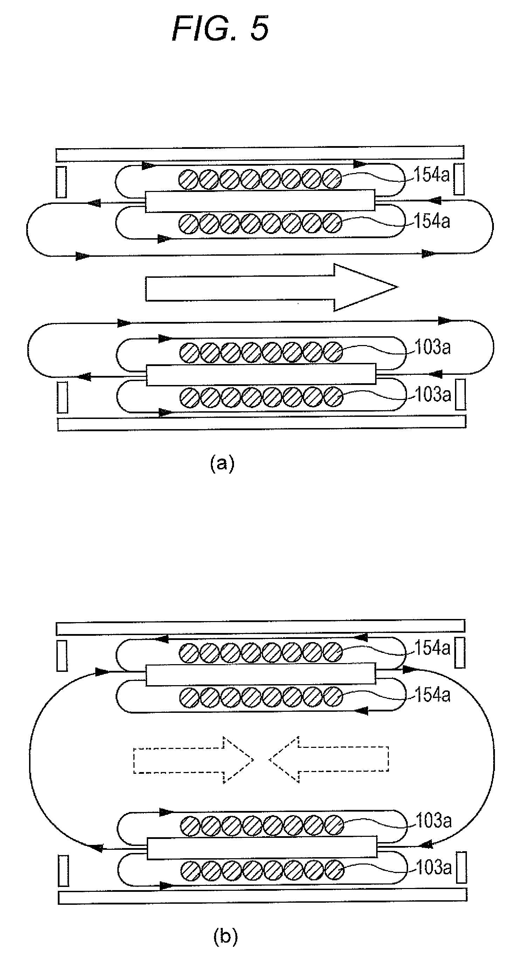

FIG. 5 is conceptual diagrams illustrating a magnetic field shape produced between power feeding coil 103a and power receiving coil 154a, where a drive frequency for driving power feeding coil 103a is assumed to be constant. These figures represent the y-z plane in FIG. 4. FIG. 5(a) illustrates a magnetic field shape when a power feeding coil current and a power receiving coil current are in phase (phase difference = 0). FIG. 5(b) illustrates a magnetic field shape when a power feeding coil current and a power receiving coil current are opposite in phase (phase difference = 180°).

It can be seen that magnetic flux is constructively reinforced toward +y direction, i.e., the rearward direction of vehicle 150, as illustrated by a bold arrow in FIG. 5(a) and that horizontal magnetic flux is canceled in FIG. 5(b). In this manner, the power feeding coil current and the power receiving coil current can be opposite in phase so that horizontal magnetic flux is canceled and unnecessary radiation can be prevented from leaking to the outside.

### <Capacitance of phase adjustment capacitor>

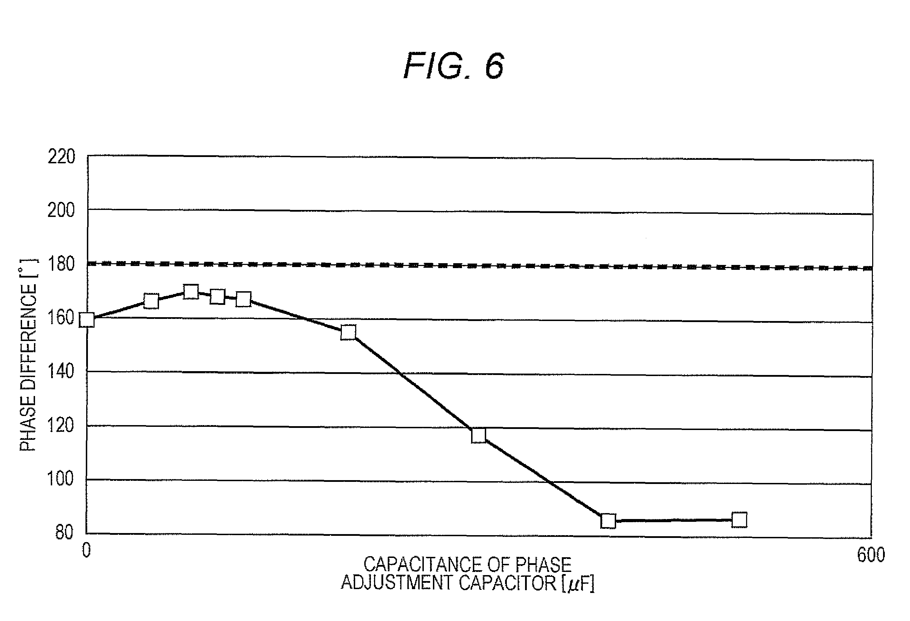

Capacitance of phase adjustment capacitor 255 will be described below. FIG. 6 illustrates a relation between a phase difference between the power feeding coil current and the power receiving coil current and the capacitance of the phase adjustment capacitor. In FIG. 6, the ordinate represents a phase difference [°] and the abscissa represents a capacitance [µF] of the phase adjustment capacitor. FIG. 6 shows that the capacitance of the phase adjustment capacitor should be set to a capacitance at which a phase difference is closest to 180°.

### <Advantageous effects of first exemplary embodiment>

Thus, according to the first exemplary embodiment, the solenoid coils are used for power feeding coil 103a and power receiving coil 154a, and the phase adjustment circuit adjusts the phase of the power receiving coil current so that a phase difference between the power receiving coil current and the power feeding coil current will be 180°. This allows the horizontal magnetic flux produced by power feeding coil 103a and power receiving coil 154a to be canceled, thereby preventing unnecessary radiation from leaking to the outside without changing a drive frequency.

### (Second exemplary embodiment)

While the solenoid coils are used for the power feeding coil and the power receiving coil in the first exemplary embodiment, spiral coils are used for the power feeding coil and the power receiving coil in a second exemplary embodiment of the present disclosure, which will be described below. Note that since a charging system according to the second exemplary embodiment of the present disclosure is configured similarly to that shown in FIGS. 1 and 2 of the first exemplary embodiment, different functions will be described, referring to FIGS. 1 and 2 if necessary.

### <Detailed configuration of power feeding unit and power receiving unit>

Power feeding unit 103 has power feeding coil 103a, which can be a spiral coil. Power feeding unit 103 feeds power to power receiving coil 154a through power feeding coil 103a under control of power feeding-side controller 102.

Power receiving unit 154 has power receiving coil 154a. Power receiving coil 154a can be, for example, a spiral coil and receives power fed from power feeding coil 103a of power feeding unit 103.

Phase adjustment circuit 253 includes phase adjustment capacitor 255 in parallel with power receiving coil 154a, and both ends of phase adjustment capacitor 255 are connected to relays 254, 256, respectively. When vehicle-side controller 153 controls relays 254, 256 to turn on, phase adjustment capacitor 255 functions. Then phase adjustment circuit 253 adjusts the phase of a power receiving coil current supplied from power receiving coil 154a so that the power receiving coil current whose phase has been adjusted and the power feeding coil current have a phase difference of 0.

### <Arrangement of coils>

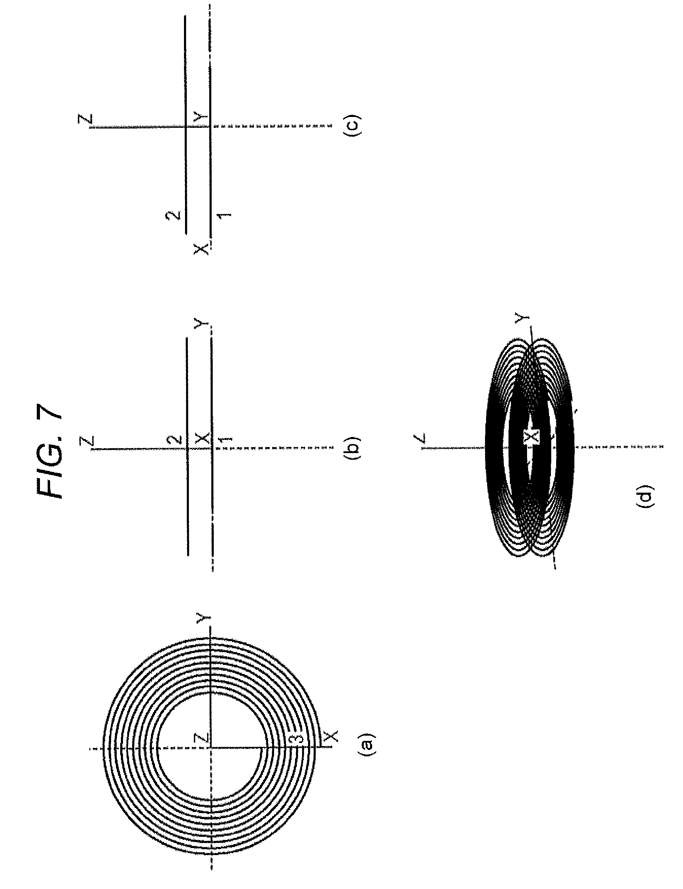

Arrangement of power feeding coil 103a and power receiving coil 154a will be described with reference to FIG. 7. In FIGS. 7(a) to 7(d), power feeding coil 103a and power receiving coil 154a are aligned with each other.

FIGS. 7(a), 7(b), and 7(c) represent an x-y plane, y-z plane, and x-z plane, respectively, and FIG. 7(d) represents a perspective view of power feeding coil 103a and power receiving coil 154a.

Thus, flat spiral coils are used for power feeding coil 103a and power receiving coil 154a, and the flat spiral coils are arranged with their flat surfaces parallel to the ground g.

### <Direction of magnetic flux>

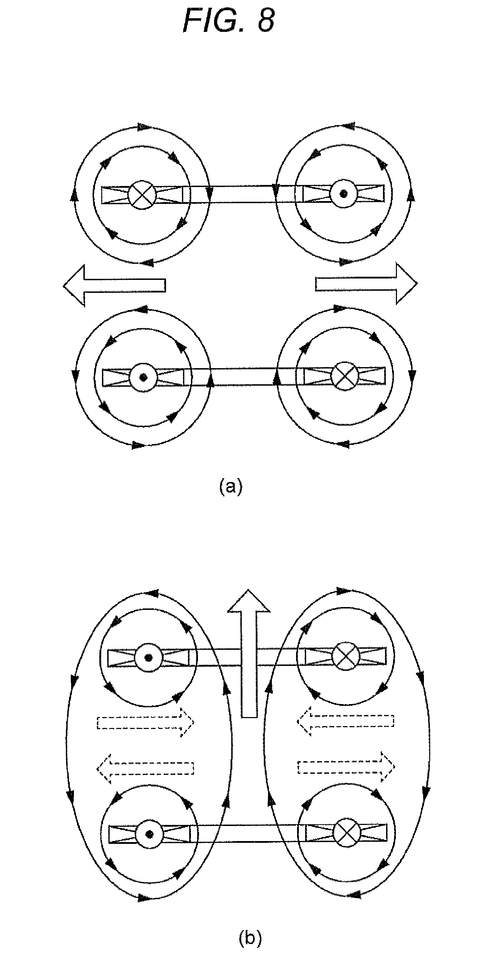

FIG. 8 is conceptual diagram illustrating a magnetic field shape produced between power feeding coil 103a and power receiving coil 154a, where a drive frequency for driving power feeding coil 103a is assumed to be constant. These figures represent the y-z plane or the x-z plane in FIG. 7. FIG. 8(a) illustrates a magnetic field shape when a power feeding coil current and a power receiving coil current are opposite in phase (phase difference = 180°). FIG. 8(b) illustrates a magnetic field shape when a power feeding coil current and a power receiving coil current are in phase (phase difference = 0).

It can be seen that magnetic flux points in the horizontal direction as illustrated by bold arrows in FIG. 8(a) and that horizontal magnetic flux is canceled and vertical magnetic flux points in +z direction, i.e., in the direction of vehicle 150, as illustrated by a bold arrow in FIG. 8(b). In this manner, the power feeding coil current and the power receiving coil current can be in phase so that the horizontal magnetic flux is canceled and unnecessary radiation can be prevented from leaking to the outside.

### <Advantageous effects of second exemplary embodiment>

Thus, according to the second exemplary embodiment, the spiral coils are used for power feeding coil 103a and power receiving coil 154a, and the phase adjustment circuit adjusts the phase of the power receiving coil current so that a phase difference between the power receiving coil current and the power feeding coil current will be 0°. This allows the horizontal magnetic flux produced by power feeding coil 103a and power receiving coil 154a to be canceled, thereby preventing unnecessary radiation from leaking to the outside without changing a drive frequency.

The exemplary embodiments have been described above.

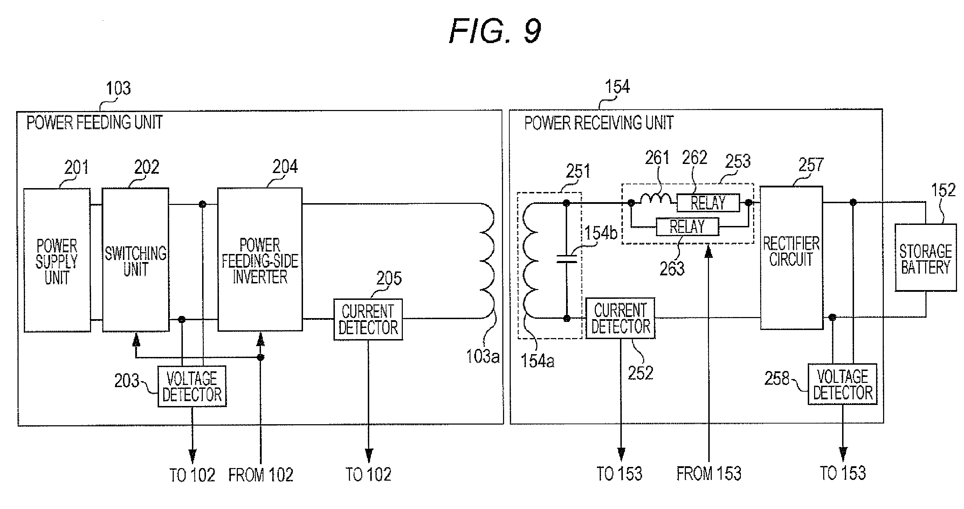

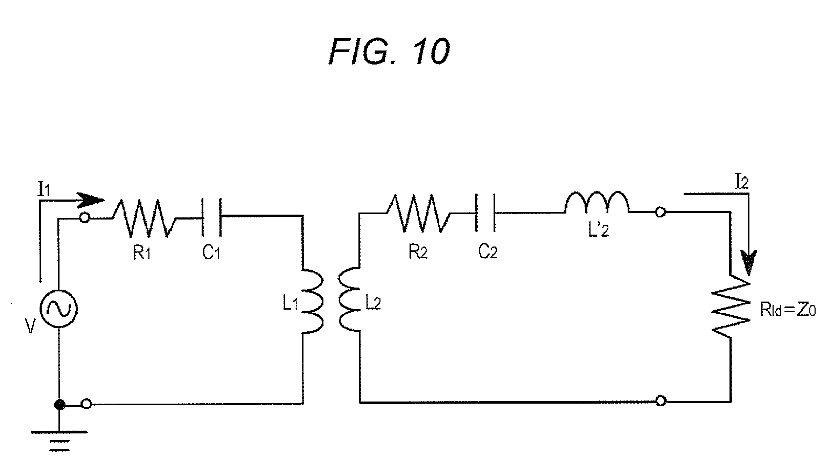

While the phase adjustment capacitor is used for the phase adjustment circuit in the above exemplary embodiments, the present disclosure is not limited thereto. For example, phase adjustment circuit 253 may be phase adjustment inductor 261 as illustrated in FIG. 9. In this case, phase adjustment circuit 253 allows phase adjustment inductor 261 to function when relay 262 is turned on and relay 263 is turned off. Conversely, in order for the function of phase adjustment inductor 261 to be turned off, relay 262 is turned off and relay 263 is turned on. FIG. 10 illustrates an equivalent circuit of power feeding unit 103 and power receiving unit 154 shown in FIG. 9.

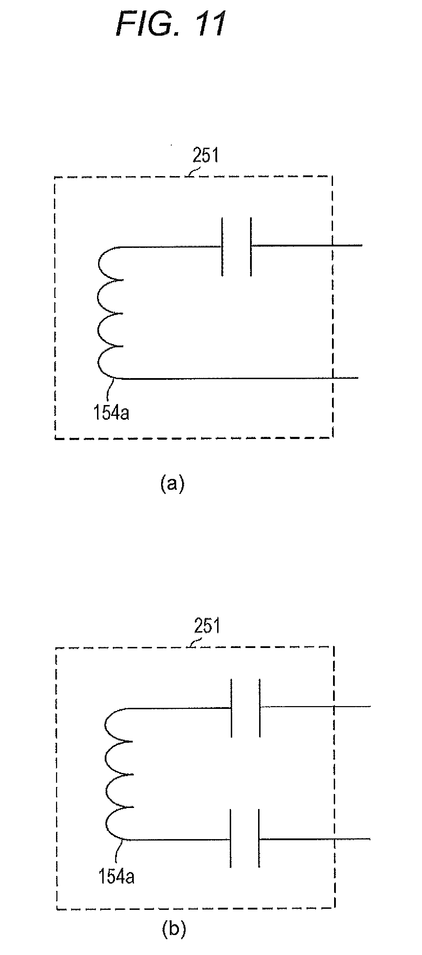

While the resonant circuit having the power receiving coil and the capacitor connected in parallel with each other has been described in the above exemplary embodiments, the present disclosure is not limited thereto. For example, one end of power receiving coil 154a may be connected in series with a capacitor as illustrated in FIG. 11(a), or both ends of power receiving coil 154a may be connected in series with capacitors as illustrated in FIG. 11(b).

Furthermore, the above exemplary embodiments have been described where the capacitance of the phase adjustment capacitor is assumed to be constant. However, the present disclosure is not limited to these exemplary embodiments and the phase adjustment capacitor can be a variable capacitor, where horizontal magnetic flux can be canceled by adjusting a capacitance depending on a drive frequency.

### INDUSTRIAL APPLICABILITY

The wireless power receiving device according to the present disclosure is applicable, for example, to vehicles such as a PHEV, EV, and the like.

### REFERENCE MARKS IN THE DRAWINGS

- 10: charging system
- 100: power feeding device
- 101: power feeding-side communication unit
- 102: power feeding-side controller
- 103: power feeding unit
- 103a: power feeding coil
- 150: vehicle
- 151: vehicle-side operation unit
- 152: storage battery
- 153: vehicle-side controller
- 154: power receiving unit
- 154a: power receiving coil
- 154b: resonant capacitor
- 155: vehicle-side communication unit
- 160: power feeding-side operation unit
- 201: power supply unit
- 202: switching unit
- 203, 258: voltage detector
- 204: power feeding-side inverter
- 205, 252: current detector
- 251: resonant circuit
- 253: phase adjustment circuit
- 254, 256, 262, 263: relay
- 255: phase adjustment capacitor
- 257: rectifier circuit
- 261: phase adjustment inductor

## Claims

1. A wireless power receiving device for receiving power wirelessly, comprising:
a resonant circuit including a power receiving coil and a resonant capacitor for receiving power from a power feeding coil; and
a phase adjustment circuit that is provided at a rear stage of the resonant circuit and adjusts a phase difference between a power feeding coil current and a power receiving coil current at a specific frequency so as to cancel horizontal magnetic flux.

2. The wireless power receiving device according to claim 1,
wherein the phase adjustment circuit is a capacitor connected in parallel with the power receiving coil.

3. The wireless power receiving device according to claim 1,
wherein the phase adjustment circuit is an inductor connected in series with the power receiving coil.

4. The wireless power receiving device according to claim 1,
wherein the phase adjustment circuit includes a relay for switching operation of the phase adjustment circuit.

5. The wireless power receiving device according to claim 4,
wherein the relay is switched to operate the phase adjustment circuit when the specific frequency is used as a drive frequency.

6. The wireless power receiving device according to claim 5, wherein the relay is switched, based on a phase difference between the power feeding coil current and the power receiving coil current, to operate the phase adjustment circuit.

7. The wireless power receiving device according to claim 1, wherein the phase adjustment circuit is a variable capacitor connected in parallel with the power receiving coil.

8. The wireless power receiving device according to claim 7, wherein capacitance of the variable capacitor is changed depending on a drive frequency so as to cancel the horizontal magnetic flux.

9. The wireless power receiving device according to claim 1, wherein the power feeding coil and the power receiving coil can be a solenoid coil or a spiral coil.
